# EUROPEAN PATENT SPECIFICATION

(11) **EP 2 715 590 B1**
(45) Date of publication and mention of the grant of the patent: **20.06.2018**
(21) Application number: 12725994.3
(22) Date of filing: 25.05.2012
(51) Int. Cl.: G06F 21/00

(54) **APPARATUS AND METHOD OF LAYERED LICENSING**
VORRICHTUNG UND VERFAHREN ZUR GESCHICHTETEN LIZENZIERUNG
APPAREIL ET PROCÉDÉ DE CONCESSION DE LICENCE PAR ÉTAGES

(30) Priority: 31.05.2011 US 201113118738
(43) Date of publication of application: 09.04.2014
(73) Proprietor: Qualcomm Incorporated, San Diego, CA 92121 (US)
(72) Inventor: HOHLFELD, Matthew, W., San Diego, California 92121 (US); LIONG, Yin Ling, San Diego, California 92121 (US); MANDYAM, Giridhar, D., San Diego, California 92121 (US); SMALL, Matthew, H., San Diego, California 92121 (US)
(74) Representative: Howe, Steven
(86) International application number: PCT/US2012/039667
(87) International publication number: WO 2012/166637

(56) References cited:
- EP-A2- 1 942 429
- WO-A2-2004/077911

## Description

### REFERENCE TO CO-PENDING APPLICATIONS FOR PATENT

The present Application for Patent is related to the following co-pending U.S. Patent Application "Apparatus and Method of In-Application Licensing" by Mahan, et al., having Attorney Docket No. 103100U2, filed concurrently herewith, assigned to the assignee hereof.

### BACKGROUND

The present disclosure relates to communication devices, and more particularly, to providing improved apparatus and methods of managing licensed items, including content and/or a service.

Although the described aspects relate generally to communication devices, an example use case with mobile devices illustrates problems with current licensing models. Mobile operators or mobile device carriers play a major part in the telecommunication industry today. Initially, such mobile operators concentrated their efforts on generating revenue by increasing their subscriber base. However, it will be appreciated that in several countries, the scope for increasing the subscriber base has now become very limited, as the market has reached close to saturation point. As a result, the mobile operators have been branching into providing value added services to subscribers, in order to increase their revenue.

One means of generating increased revenue is through the sales of premium content and/or services to users, such as ringtones, wallpaper, games, etc. These items may be provided by the mobile operators themselves, or by business entities who may operate in collaboration with the mobile operators to provide such items. In some aspects, for example, the content and/or service items may be available for download to a user's communication device, such as a mobile device, upon payment of a fee.

Many benefits such as maximizing the potential earnings for sales may accrue upon recommending and distributing to users content and/or services that are of interest to the users. The user can have a better experience using the user's communication device in light of these content and/or services. Licensing of such content and/or services can provide an incentive for providers to create such offerings.
The document EP 1 942 429, 9th July 2008, discloses a digital rights management method for terminal.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In one aspect, the present disclosure provides a method for licensing by detecting a licensable item on a device and accessing a legacy license associated with the licensable item. The legacy license corresponds to a legacy licensing policy. The method further includes accessing a layered license associated with the licensable item wherein the layered license corresponds to a layered licensing policy. The method further includes integrating the legacy licensing policy and the layered licensing policy into an integrated license, and enforcing the integrated license.

In another aspect, the present disclosure provides at least one processor for licensing. A first module detects a licensable item on a device. A second module accesses a legacy license associated with the licensable item, wherein the legacy license corresponds to a legacy licensing policy. A third module accesses a layered license associated with the licensable item, wherein the layered license corresponds to a layered licensing policy. A fourth module integrates the legacy licensing policy and the layered licensing policy into an integrated license. A fifth module enforces the integrated license.

In an additional aspect, the present disclosure provides a computer program product for licensing. A non-transitory computer-readable storage medium stores instructions. At least one instruction causes a computer to detect a licensable item on a device. At least one instruction causes the computer to access a legacy license associated with the licensable item, wherein the legacy license corresponds to a legacy licensing policy. At least one instruction causes the computer to access a layered license associated with the licensable item, wherein the layered license corresponds to a layered licensing policy. At least one instruction causes the computer to integrate the legacy licensing policy and the layered licensing policy into an integrated license. At least one instruction causes the computer to enforce the integrated license.

In a further aspect, the present disclosure provides an apparatus for licensing. The apparatus comprises means for detecting a licensable item on a device. The apparatus comprises means for accessing a legacy license associated with the licensable item, wherein the legacy license corresponds to a legacy licensing policy. The apparatus comprises means for accessing a layered license associated with the licensable item, wherein the layered license corresponds to a layered licensing policy. The apparatus comprises means for integrating the legacy licensing policy and the layered licensing policy into an integrated license. The apparatus comprises means for enforcing the integrated license.

In yet another aspect, the present disclosure provides an apparatus for licensing. An invoking component detects a licensable item on a device. A license enforcement component accesses a legacy license associated with the licensable item. The legacy license corresponds to a legacy licensing policy. The license enforcement component further accesses a layered license associated with the licensable item, wherein the layered license corresponds to a layered licensing policy. The license enforcement component additionally integrates the legacy licensing policy and the layered licensing policy into an integrated license, and enforces the integrated license.

To the accomplishment of the foregoing and related ends, the one or more aspects comprise the features hereinafter described in detail and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements.
FIG. 1 illustrates a schematic diagram of communication system wherein a layered licensing agent on a communication device intelligently and semi-autonomously can augment legacy license policies or features for licensed content, according to one aspect.
FIG. 2 illustrates a schematic diagram of an apparatus for licensing in a communication environment, according to one aspect.
FIG. 3 illustrates a flow diagram for a method of licensing in a communication environment, according to one aspect.
FIG. 4 illustrates a functional block diagram for a system of logical grouping of electrical components for licensing in a communication environment, according to one aspect.
FIG. 5 illustrates a timing diagram for a first phase of licensable item acquisition, according to one aspect.
FIG. 6 illustrates a timing diagram for a second phase of licensable item acquisition, according to one aspect.
FIG. 7 illustrates a timing diagram for a local license check, according to one aspect.
FIG. 8 illustrates a timing diagram for a remote license check, according to one aspect.
FIG. 9 illustrates a timing diagram for an offline remote license check, according to one aspect.
FIG. 10 illustrates a schematic diagram of an exemplary hardware environment of a user device or mobile device for managing one or more licensed items, according to one aspect.
FIG. 11 illustrates a schematic diagram of an exemplary hardware environment of a network apparatus for managing one or more licensed items, according to one aspect.

### DETAILED DESCRIPTION

Described herein is a layered licensing methodology and apparatus for dynamically modifying an extent of a license, a license policy, or a license feature for a licensable item on a communication device while maintaining baseline license enforcement by a legacy licensing component. In an exemplary aspect, a layered license agent on the communication device, such as a mobile device, may be located at a layer above a legacy licensing component, and provides complementary extensions to the legacy license component in synchronous or asynchronous coordination with a remote license server. In other words, in some aspects, the layered licensing agent may operate in combination with the legacy licensing component to enforce licensing policies from both new and legacy licensing infrastructures/systems. Thereby, a legacy licensing network infrastructure can continue to support a mixed population of mobile devices with a portion only being capable of legacy licensing.

In particular, in one example, a uniform licensing implementation is created for new and old devices, including existing devices having a different (e.g., legacy) licensing scheme. As such, a new licensable item distribution system can address the largest number of devices possible, including those devices already in the field operable with the legacy licensing scheme, while offering expanded opportunities for content and/or service providers and users through a new or layered licensing scheme. For instance, the new licensable item distribution system can include facilities to license a licensable item (e.g., content and/or services) in a variety of ways through the use of a layered license agent that has intelligence to cooperatively enforce new layered licensing policy in combination with the legacy licensing policy.

In other words, the described apparatus and methods of layered licensing can provide a flexible solution that balances complexity and inter-operability. In this manner, implementation details, system analysis, and code re-use may be improved in a licensable item distribution system that can use the same dynamic protections across new and legacy devices versus one where a distinct interoperability-based implementation is required for legacy devices.

In one aspect, layering the new scheme on top of code licensed by the legacy system provides a mechanism for inter-operation between the licensing systems without undue cost and complexity. According to one aspect, in new devices, the layered license agent can use the execution optimizations of the legacy license system while disabling enforcement of legacy licenses by generating valid unlimited use licenses in the legacy system and applying the unlimited use licenses to all licensable items (e.g., content and/or services) protected by the new scheme. As far as the underlying legacy licensing system and management software is aware, all of the newly protected licensable items are fully licensed. Only the new system (e.g., the layered licensing agent) is aware of the restrictions placed on the licenses for the newly protected licensable item. Any licensable item on these devices licensed by the legacy system will continue to function and be completely unaware of the new licensing system that has been added. It should be noted that the unlimited use legacy license is but one example, and that other types of legacy licenses with different policies may be used in conjunction with the layered license agent, such that some license enforcement is managed by the legacy licensing component while other license enforcement is managed by the layered license agent.

Various aspects are now described with reference to the drawings. In the following description, for purposes of explanation, numerous specific details are set forth in order to provide a thorough understanding of one or more aspects. It may be evident, however, that the various aspects may be practiced without these specific details. In other instances, well-known structures and devices are shown in block diagram form in order to facilitate describing these aspects.

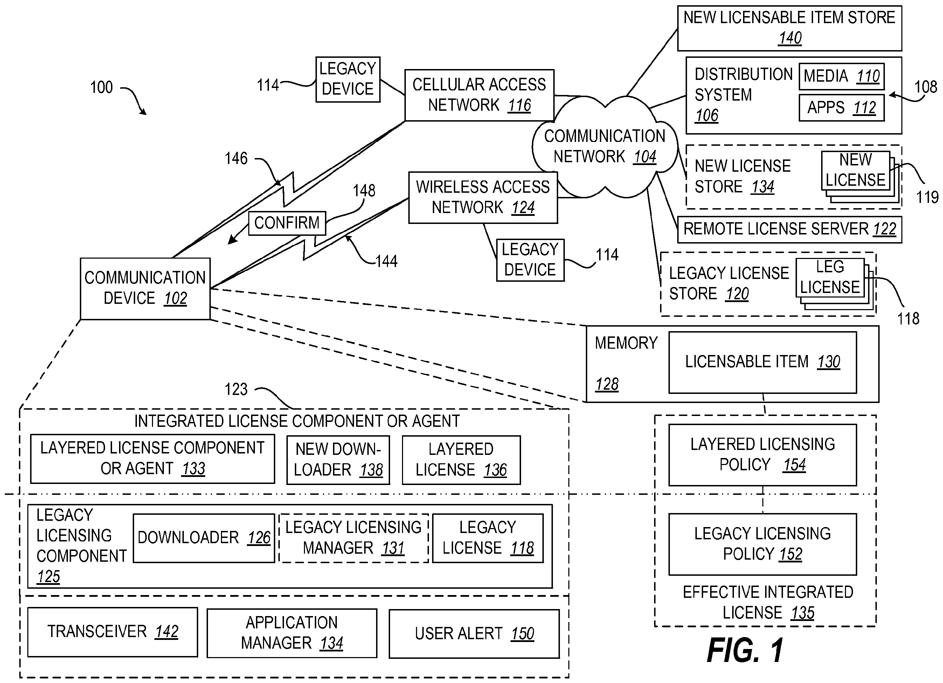

With initial reference to **FIG. 1**, according to one aspect in a communication environment **100**, an aspect of an apparatus, depicted as a mobile device or communication device **102**, provides support for acquiring one or more licensable items **130**, such as content and/or services, and enforcement of one or more licensing policies corresponding to each licensable item **130.** Consistent with one aspect, a communication network **104** includes one or more distribution system(s) **106** for distributing one or more licensable items **108**, such as but not limited to media content **110** and application content **112**.

It should be noted that as used herein, a "licensable item" may include a content item ("content") or a service item ("service"), each respectively corresponding to an effective, integrated license **135** having one or more layered licensing policies **154** and one or more legacy licensing policies **152**. For instance, each layered licensing policy **154** corresponds to a new licensing scheme or system, for example, while each legacy licensing policy **152** corresponds to a legacy licensing scheme or system. Further, each of the layered licensing policies **154** and the legacy licensing policies **152**, for example, may define one or more of a rule, a condition, a parameter, instructions, etc., corresponding to desired licensing enforcement for the respective licensable item **130**. Accordingly, the combination of the one or more layered licensing policies **154** and the one or more legacy licensing policies **152** defines the effective, integrated license **135** that may be used by layered licensing component **133** and/or legacy licensing component **125** to perform licensing enforcement for the corresponding licensable item **130**.

As used in this disclosure, the term "content" includes, at least, any type of application, multimedia file, image file, executable, program, web page, script, document, presentation, message, data, meta-data, or any other type of media or information that may be rendered, processed, or executed on a device. Also, the term "service" includes, at least, providing of an action or an accommodation, including in electronic or non-electronic form. For example, in one aspect, a service may include providing access, such as access to a network server, access to a physical location such as a building, a restricted area, etc. For instance, in one aspect that should not be construed as limiting, a use case of providing access to a network server may include a scenario where a user is a player in a game, and access is provided to a network server to enable the user to participate in a network-based multi-player service for the game provided by the network server. Additionally, for instance, in an aspect that should not be construed as limiting, a use case of providing access to a physical location may include providing access and/or a membership to a gym.

As used in this disclosure, the term "licensable item" or "licensed item" refers to content, or to a service, or to both, including items that can be used, executed, distributed, accessed, modified, viewed, presented, etc., subject to a license.

Also, as used in this disclosure, the term "license" is used to describe an enabling key, datum, object, policy, or authenticated message that allows use of a licensable item. The license can be a specific implementation of Data Rights Management (DRM) executed by a license agent on the device with at least intermittent coordination with a licensing server. DRM, and thus the term license as used herein, can refer to access control technologies that are used by hardware manufacturers, publishers, copyright holders and individuals to limit the use of digital content such as licensable content and/or services, as well as devices. The license can be used to describe any technology that inhibits uses of licensable content and/or services in a manner that is not desired or intended by an originating or distributing provider. Moreover, as noted above, a license may include one or more policies or policy objects, which may correspondingly define one or more rules, conditions, parameters, or instructions that characterize the license.

The communication network **104** can support legacy devices **114** that acquire one or more of the available licensable items **108** via a cellular access network **116** subject to a legacy license **118** from a legacy license system or legacy license store **120**. Alternatively or in addition, legacy devices **114** can receive one or more of the available licensable items **108** via a wireless access network **124**.

Similar to the legacy devices **114**, the communication device **102** can comprise a legacy licensing component **125** having a downloader **126** for initially provisioning a non-transitory computer-readable storage medium, depicted as a memory **128**, of the communication device **102** with licensable item **130** acquired from the available licensable items **108** and subject to a legacy license **118** from the legacy license store **120**. One of ordinary skill in the art should appreciate that the provisioning can be made during original manufacture, manual installation, cellular, or wireless download, etc. In an aspect, for example, legacy license **118** may be defined by one or more legacy licensing policies **152**. The communication device **102** can utilize a legacy license manager **131** that enables an application manager **132** to use the licensable item **130** according to the one or more legacy licensing policies **152**.

Unlike the legacy devices **114**, however, the communication device **102** can interact with a new license store **134** to implement advanced licensing terms or features by having a layered license component or layered license agent **133** that can update, modify, augment, enforce, etc., features defined by one or more layered licensing policies **154** associated with a licensable item **130** to define an effective integrated license **135** . In an exemplary aspect, the communication device **102** does not access the legacy license store **120**, but instead accesses new license store **134** and obtains a new license **119** for the licensable item **130**. For example, the obtained new license **119** may be defined by one or more layered licensing policies **154**. Correspondingly, in one aspect, the legacy license **118** as defined by one or more legacy licensing policies **152** is set to an unlimited license with a layered license **136** as defined by one or more layered licensing policies **154** providing specific license features (e.g., network connectivity, reporting requirements, allowable uses, etc.) for the licensable item **130**.

Specifically, in one aspect, the communication device **102** can require a modification to one or more legacy licensing policies **152** in order to define the effective, integrated license **135** for the licensable item **130**. For instance, a feature associated with the licensable item **130** may not have been provided for or may have been expired. Examples can include reporting of a status of a license policy, requiring network connectivity information by a license, or not implementing a timing requirement by the legacy license. Alternatively, the licensable item **130** can require an extension of a legacy licensing policy **152**, such as a rule relating to access to a second category of use (e.g., upgrade, update, etc.) from an originally licensed first category of use (e.g., play, execute, present, display, etc.) allowed by the legacy license **118**. Alternatively or in addition, the extension may relate to a license parameter defined by a legacy licensing policy **152**, such as the term of the integrated license **135** (which may have expired after having been initially unexpired, based upon calendar date), number of uses, cumulative duration of use, etc. So, in this example, the layered license agent **133** may operate to define the effective, integrated license **135** to include the modification or extension, such as for an extended term on the communication device **102** in response to accessing the license that has expired, by obtaining one or more layered licensing policies **152**.

Alternatively, a new download component **138** can provision the communication device **102** with the licensable item **130** from a new licensable item store **140** associated with the new license store **134**. For instance, the hardware, firmware or software optimization provided by the legacy license manager **131** can be leveraged with a modification or replacement made for an application manager **132** that also looks to the layered license agent **133** for extra functionality. For instance, the legacy license **118** of the licensable item **130** can be unlimited but lack a license feature such as reporting license compliance or allowing an update, which functionality may be provided via layered licensing policy **154** and layered license agent **133**.

In some aspects, the layered licensing component or agent **133** working together with, or overriding, the legacy licensing component **125**, may be referred to as an integrated licensing component or agent **123**. Moreover, according to one example, the layered licensing component or agent **133** or the integrated licensing component or agent **123** may define a single license agent at the device **102** that can enforce all of the licenses, e.g. legacy license **118** and layered license **136**, and their corresponding policies, e.g. legacy licensing policy **152** and layered licensing policy **154**, for any licensed items, e.g. licensable item **130**, used on the device **102**. Further, according to an example, such a single license manager or license agent may be configured to operate with different types of content, different types of services, content or services from different licensing authorities or systems, etc. In other words, in this aspect, the layered licensing component or agent **133** or the integrated licensing component or agent **123** may function as a universal or generic license manager or license agent, thereby eliminating or reducing the need for a plurality of different license managers or agents specific to different types of content or services, different licensing authorities, or different licensing systems.

In one aspect, the layered license agent **133** occasionally communicates with the remote license server **122** to reduce network data traffic. For example, the layered license agent **133**, via a transceiver **142** of the communication device 102, can update the integrated license **135** after a selected period of time (e.g., hours, days, weeks, months, etc.). Alternatively or in addition, the layered license agent **133** via a transceiver **142** of the communication device **102** can update the integrated license **135** when a low cost or high bandwidth communication channel is available, depicted as a wireless link **144**. Alternatively or in addition, the layered license agent **133** via a transceiver **142** of the communication device **102** can update the integrated license **135** on demand or as needed, as depicted via a cellular air link **146**, with a confirmation **148** received back from the remote license server **122**.

In an exemplary aspect, intelligent modification of the effective, integrated license **135** by the layered license agent **133** can utilize one or more types of communication during content acquisition, local license check, remote license check, or offline remote license check. Thereby, the layered license component **133** can modify the license (e.g., in the case where the legacy license may have expired, to extend the term) by performing a synchronous or asynchronous communication with the remote license server **122** with the request to use pending. For example, asynchronous communication can occur before the request or after the request. For synchronous communication, the layered license agent **133** can generate a user alert **150** for a delay imposed by the synchronous communication.

In one aspect, the communication device **102** can utilize licensable item **130** that is subject to a legacy licensing policy **152** or the layered licensing policy **154**, or a combination of the legacy licensing policy **152** and the layered licensing policy **154** (e.g., the effective, integrated license **135**).

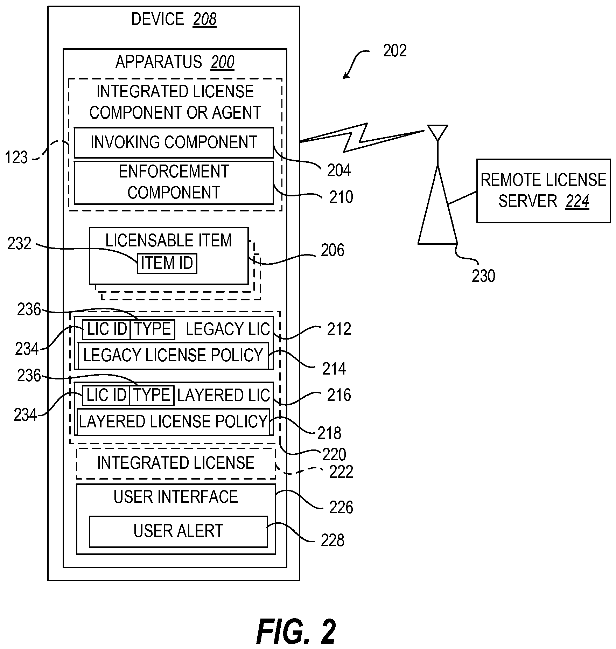

By virtue of the foregoing, in **FIG. 2**, the present disclosure provides an apparatus **200** (e.g., the communication device **102** (FIG. 1)) which can provide for acquiring and enforcing licensing policy for a licensable item. In an exemplary aspect, licensing is provided in a communication environment **202**. An invoking component **204**, such as within the integrated licensing agent **123** or the layered license agent **133** described in Fig. 1, detects a licensable item **207**, similar to licensable item **130** (Fig. 1), on a device **208**. For instance, invoking component **204** may detect a user input received by user interface **226** due to selection of the licensable item **206**(e.g., media content, application content, etc.) for use on the device **208**. A license enforcement component **210**, such as within the integrated licensing agent 123 or the layered license agent **133** described in Fig. 1, responds to the invoking component **204** by accessing a legacy license **212** associated with the licensable item **206**, wherein the legacy license **212** corresponds to a legacy licensing policy **214**. The license enforcement component **210** accesses a layered license **216** associated with the licensable item **205**, wherein the layered license **216** corresponds to a layered licensing policy **218**. The license enforcement component **210** integrates a combination **220** of the legacy licensing policy **214** and the layered licensing policy **218** to define an integrated license **222** (which, although illustrated as a separate component, may merely be defined by combination **220**). The license enforcement component **210** enforces the integrated license **222**.

In one aspect, the license enforcement component **210** accesses a legacy license **212** that is set as an unlimited license and accesses a layered license **212** that provides for a network communication requirement.

In another aspect, the license enforcement component **210** accesses a legacy license and a layered license **216** that are both locally-stored.

In a further aspect, the license enforcement component **210** integrates the legacy licensing policy **214** and the layered licensing policy **218** by determining a combination of constraints, e.g. policies, imposed by both the legacy license **212** and the layered license **216**.

In yet another aspect, the license enforcement component **210** accesses a null result for the legacy licensing policy **214** or the legacy license **212**. The license enforcement component **210** thus integrates the legacy licensing policy **214** and the layered licensing policy **218** by determining a constraint imposed only by the layered license **216**.

In another aspect, the license enforcement component **210** accesses the layered license **216** by accessing a remote license server **224** to receive at least a portion of the layered licensing policy **218** associated with the layered license **216**. For example, the license enforcement component **210** performs a synchronous communication with the remote license server **224** while a request to use the licensable item **205** is pending, which can further include generating a user alert **226** on a user interface **228** for a delay imposed by the synchronous communication. Alternatively, the license enforcement component **210** can perform an asynchronous communication with the remote license server **224** prior to receiving a request to use the licensable item **205**. In an additional aspect, the license enforcement component **210** can access the remote license server **224** by communicating via a cellular access node or via a wireless access point **230**.

In one aspect, the license enforcement component **210** enforces at least one of a recall, deletion, update, transfer, upgrade, expiration, download or activation of a selected licensable item **206**.

In another aspect, for example, the license enforcement component **210** enforces a term update policy of the integrated license **222**, and in some aspect may perform updating a current term to one of a future calendar date, an additional duration of time, or an additional enumeration of uses.

In a further aspect, the license enforcement component **210** determines an item identifier **232** corresponding to the licensable item **205** and determines the legacy licensing policy **214** and the layered licensing policy **218** based upon a match between the item identifier **232** and a license identifier **234** corresponding to the licensable item **205**. Alternatively, the license enforcement component **210** determines the item identifier **232** corresponding to the licensable item **205** and determines the legacy licensing policy **214** and the layered licensing policy **218** based upon a match between the item identifier **232** and a license type **236** corresponding to the licensable item **205**.

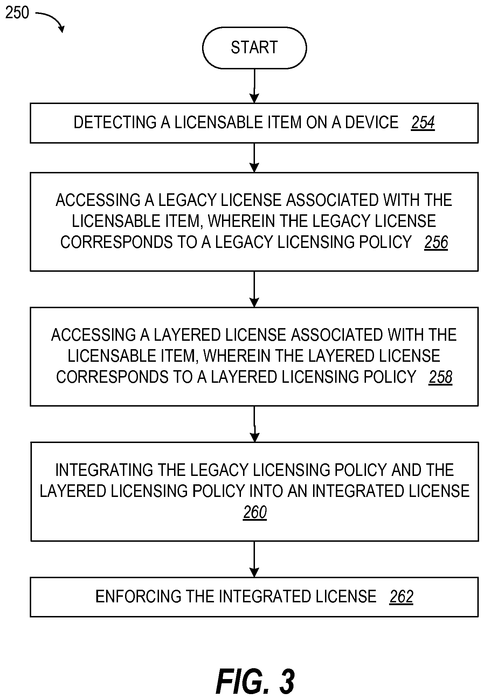

In **FIG. 3**, a methodology **250** is provided for licensing, according to one aspect. A device detects a licensable item on a device (block **254**). The device accesses a legacy license associated with the licensable item, wherein the legacy license corresponds to a legacy licensing policy (block **256**). The device accesses a layered license associated with the licensable item, wherein the layered license corresponds to a layered licensing policy (block **258**). The device integrates the legacy licensing policy and the layered licensing policy into an integrated license (block **260**). The device enforces the integrated license (block **262**).

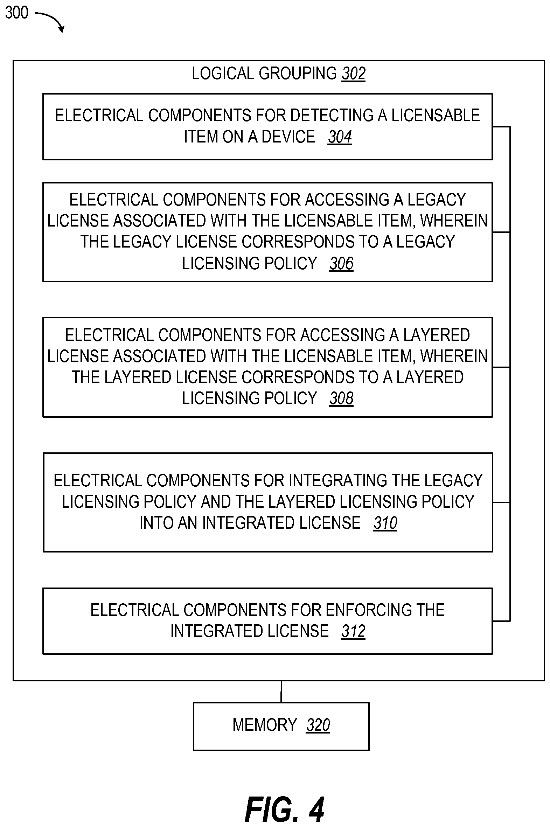

With reference to **FIG. 4**, illustrated is a system **300** for licensing, according to one aspect. For example, system **300** can reside at least partially within a communication device, mobile device, or user equipment (UE). It is to be appreciated that system **300** is represented as including functional blocks, which can be functional blocks that represent functions implemented by a computing platform, processor, software, or combination thereof (e.g., firmware). System **300** includes a logical grouping **302** of electrical components that can act in conjunction. For instance, logical grouping **302** can include an electrical component **304** for detecting a licensable item on a device. Moreover, logical grouping **302** can include an electrical component **306** for accessing a legacy license associated with the licensable item, wherein the legacy license corresponds to a legacy licensing policy. Further, logical grouping **302** can include an electrical component **308** for accessing a layered license associated with the licensable item, wherein the layered license corresponds to a layered licensing policy. In addition, logical grouping **302** can include an electrical component **310** for integrating the legacy licensing policy and the layered licensing policy into an integrated license. In addition, logical grouping **302** can include electrical component **312** for enforcing the integrated license. Additionally, system **300** can include a memory **320** that retains instructions for executing functions associated with electrical components **304-312.** While shown as being external to memory **320**, it is to be understood that one or more of electrical components **304-312** can exist within memory **320**.

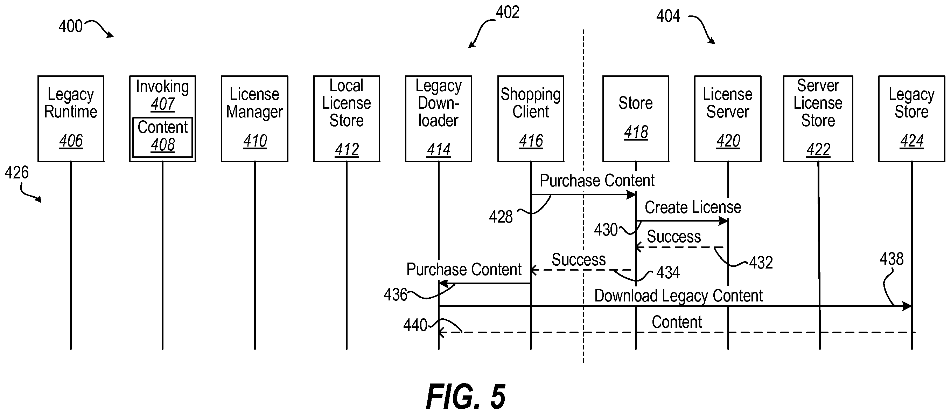

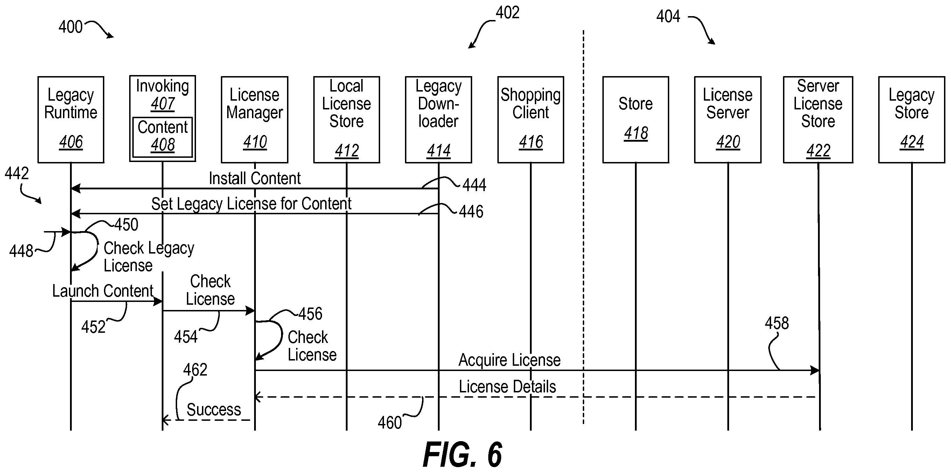

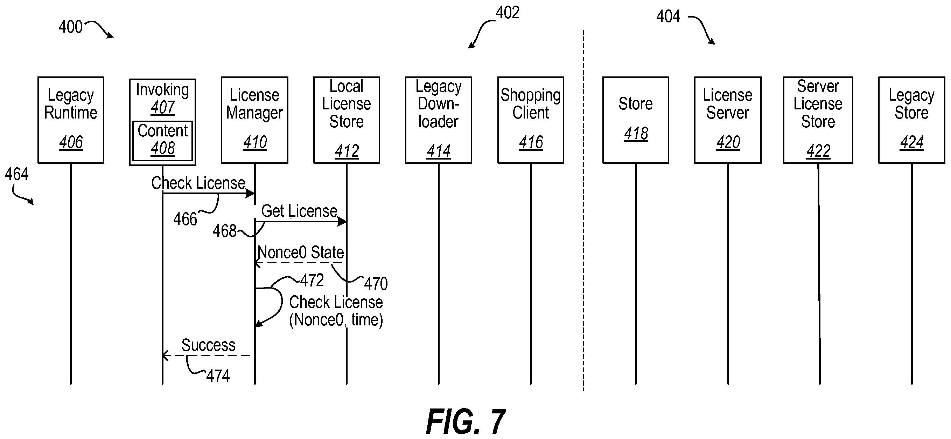

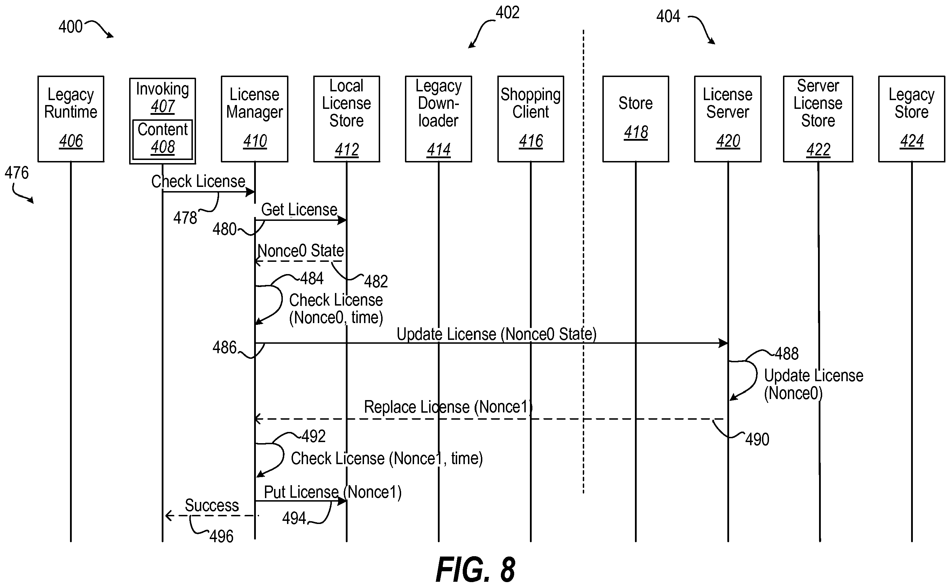

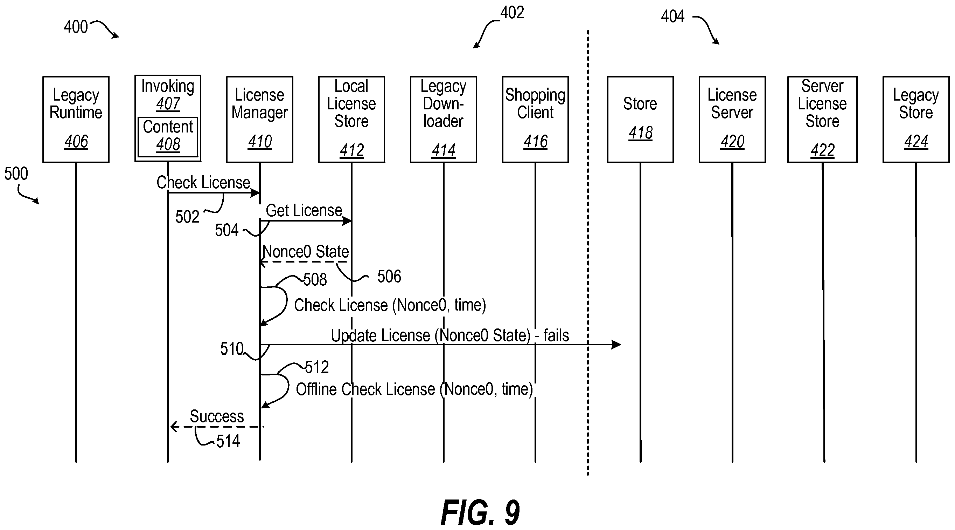

In **FIGS. 5-9**, a communication system **400** of a communication device **402** and a network **404** is depicted for licensing in a communication environment, according to one aspect. **FIGS. 5-9** are described with reference to a licensable item in the form of content, however, it is to be understood that a service may be substituted for content, or that both content and services may be included. In particular, a first phase of content acquisition (FIG. 5), a second phase of content acquisition (FIG. 6), local license check (FIG. 7), remote license check (FIG. 8), and offline remote license check (FIG. 9) are depicted. In one example, the communication device **402** comprises a legacy runtime **406**, an invoking component **407** for content **408**, license manager **410**, local license store **412**, legacy downloader **414**, and shopping client **416**. According to one aspect, the network **404** comprises a store **418**, license server **420**, server license store **422**, and a legacy store **424**.

In one aspect, the invoking component **407** can be, for instance, a control component, an application manager (e.g., legacy or layered), a license manager, a content launcher, etc.

With particular reference to **FIG. 5**, a methodology **426** for content acquisition (phase 1) is depicted, according to one aspect,. The shopping client **416** communicates with the store **418** to purchase content as depicted at **428**. The store **418** communicates with the license server **420** to create a license as depicted at **430**. The license server **420** communicates success to the store **418** as depicted at **432**. The store **418** in turn reports success to the shopping client **416** as depicted at **434**. The shopping client **416** informs the legacy downloader **414** of the purchase of content as depicted at **436**. The legacy downloader **414** communicates with the legacy store **424** to download legacy content, e.g., a licensable item **130** having a legacy licensing policy **152** as described with respect to Fig. 1, as depicted at **438**. The legacy store **424** responds to the legacy downloader **414** by downloading the content as depicted at **440**.

With particular reference to **FIG. 6****,** a methodology **442** is depicted for content acquisition (phase 2), according to one aspect. The legacy downloader **414** installs the content for the legacy runtime **406** as depicted at **444**. The legacy downloader **414** sets the legacy license for the content for the legacy runtime **406** as depicted at **446**. When the invoking component **407** selects to use content **408** as depicted at **448**, the legacy runtime **406** performs a license check as depicted at **450** and launches the content **408** as depicted at **452**. The content **408** or application that consumes the content **408** checks the license with the license manager **410** as depicted at **454**. The license manager **410** performs a check of the license as depicted at **456**. In one aspect, the license manager communicates with the server license store **422** to acquire a license as depicted at **458**, which in turn responds with license details as depicted at **460**. The license manager **410** then reports success to the content **408**.

With particular reference to **FIG. 7**, a methodology **464** is depicted for a local license check, according to one implementation. The content **408** communicates with the license manager **410** to check the license as depicted at **466**. The license manager **410** communicates with the local license store **412** to get the license as depicted at **468**, which responds with a NonceO state as depicted at **470**. The license manager **410** checks the license with NonceO state given the current time as depicted at **472**. The license manager **410** can report success to the content **408** as depicted at **474**.

With particular reference to **FIG. 8**, a methodology **476** is depicted for a remote license check, according to one aspect. The content **408** communicates with the license manager **410** to check the license as depicted at **478**. The license manager **410** communicates with the local license store **412** to get the license as depicted at **480**, which responds with a NonceO state as depicted at **482**. The license manager **410** checks the license with NonceO state given the current time as depicted at **484**. In this instance, an update of the license is warranted. As such, the license manager **410** communicates with the license server **420** with a request to update license having NonceO state as depicted at **486**. The license server **420** updates the license of state NonceO as depicted at **488** and communicates with the license manager **410** to replace the license with a license of Nonce 1 state as depicted at **490**. The license manager **410** checks the license with Nonce1 state given the current time as depicted at **492**. The license manager **410** communicates with the local license store **412** to put the license with Nonce1 state into local storage as depicted at **494**. Then the license manager **410** can report success to the content **408** as depicted at **496**.

With particular reference to **FIG. 9**, a methodology **500** is depicted for an offline remote license check, according to one aspect. The content **408** communicates with the license manager **410** to check the license as depicted at **502**. The license manager **410** communicates with the local license store **412** to get the license as depicted at **504**, which responds with a NonceO state as depicted at **506**. The license manager **410** checks the license with NonceO state given the current time as depicted at **508**. In this instance, an update of the license is warranted. Therefore, the license manager **410** attempts but fails to communicate with the license server **420** with a request to update license having Nonce0 state as depicted at **510**. The license manager **410** performs an offline check of the license using state Nonce0 and the current time as depicted at **512**. Then the license manager **410** can report success to the content **408** as depicted at **514**.

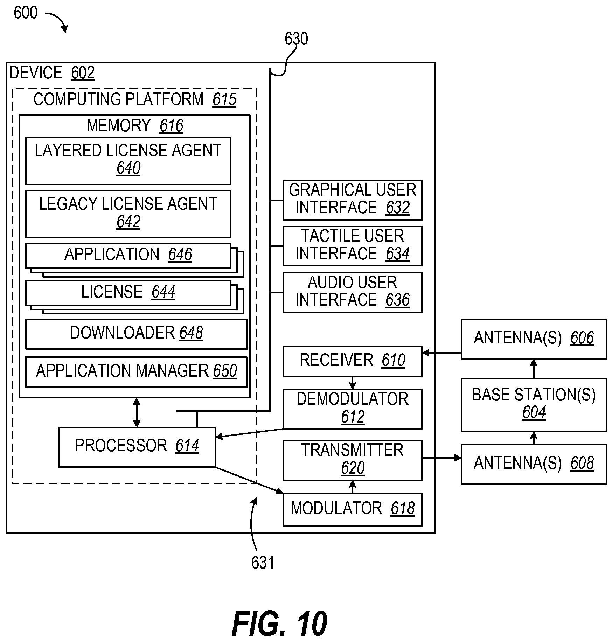

**FIG. 10** is a block diagram of another system **600** that can be utilized to implement various aspects of the functionality described herein. In one example, system **600** includes a mobile terminal, user device, communication device, or mobile device **602.** As illustrated, mobile device **602** can receive signal(s) from one or more base stations **604** via one or more receive (Rx) antennas **606** and transmit to the one or more base nodes or stations **604** via one or more transmit (Tx) antennas **608**. Additionally, mobile device **602** can comprise a receiver **610** that receives information from receive antenna(s) **606**. In one example, the receiver **610** can be operatively associated with a demodulator **612** that demodulates received information. Demodulated symbols can then be analyzed by a processor **614**. Processor **614** of a computing platform **615** can be coupled to memory **616**, which can store information related to code clusters, access terminal assignments, lookup tables related thereto, unique scrambling sequences, and/or other suitable types of information. In one example, mobile device **602** can also include a modulator **618** that can multiplex a signal for transmission by a transmitter **620** through transmit antenna(s) **608**. The receiver **610** and transmitter **620** can cooperatively function as a transceiver **631**. Databus **630** can interface the processor **614** to a graphical user interface **632**, a tactile user interface **634**, and an audio user interface **636**.

In memory **616**, a layered license agent **640** can augment a legacy license component **642** by modifying license **644** for content, depicted as an application **646** that were downloaded by downloader **648**. An application manager **650** manages use, update, upgrade, deletion, etc., of the application **646**.

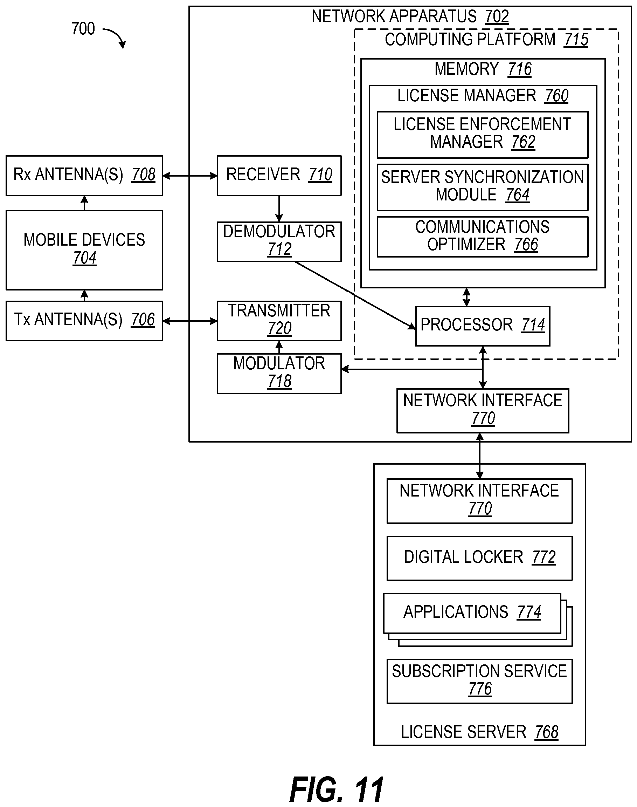

**FIG. 11** is a block diagram of a system **700** that can be utilized to implement various aspects of the functionality described herein. In one example, system **700** includes a network apparatus **702** (e.g., base node or station). As illustrated, network apparatus **702** can receive signal(s) from one or more mobile devices **704** and transmit to the one or more mobile devices **704** via one or more antennas **706**. Additionally, network apparatus **702** can comprise a receiver **710** that receives information from antenna(s) **708**. In one example, receiver **710** can be operatively associated with a demodulator **712** that demodulates received information. Demodulated symbols can then be analyzed by a processor **714.** Processor **714** of a computing platform **715** can be coupled to memory **716**, which can store data and/or program codes related to network apparatus **702**. Additionally, network apparatus **702** can employ processor **714** to perform methodologies described herein such as a license manager **760** having components of a license enforcement manager **762**, server synchronization module **764**, and communications optimizer **766**. Network apparatus **702** can also include a modulator **718** that can multiplex a signal for transmission by a transmitter **720** through antenna(s) **706**. In an exemplary aspect, some functions for supporting the mobile devices **704** for licensed content is performed remote to the network apparatus **702**, depicted as a network server **768** communicating via network interfaces **770** and providing services of a digital locker **772**, a repository of applications **774** for download, and subscription services **776**.

Those of skill would further appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

As used in this application, the terms "component", "module", "system", and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In addition, the term application as used herein refers to computer software program in general and can further encompass data, configuration settings, etc., used by the computer software program. Examples include utilities such as e-mail, Short Message Service (SMS) text utility, chat interface, web browsers, calculators, viewers, media players, games, etc. In an exemplary aspect, application can refer to software that is suitable for use on a mobile device, especially to being downloaded via a Wireless Local Access Network (WLAN) or Wireless Wide Area Network (WWAN).

For clarity, examples herein denote applications that are locally stored on user equipment, mobile devices, handset, access terminals, etc. However, implementations can encompass applications that are remotely stored. Similarly, for clarity distributing of the applications to the mobile devices can be described as being wirelessly downloaded from a WWAN or WLAN or P2P. However, implementations can include wired distribution, manual insertion of non-transitory computer readable storage medium, and unlocking a previously installed software object.

The word "exemplary" is used herein to mean serving as an example, instance, or illustration. Any aspect or design described herein as "exemplary" is not necessarily to be construed as preferred or advantageous over other aspects or designs.

Various aspects will be presented in terms of systems that may include a number of components, modules, and the like. It is to be understood and appreciated that the various systems may include additional components, modules, etc. and/or may not include all of the components, modules, etc. discussed in connection with the figures. A combination of these approaches may also be used. The various aspects disclosed herein can be performed on electrical devices including devices that utilize touch screen display technologies and/or mouse-and-keyboard type interfaces. Examples of such devices include computers (desktop and mobile), smart phones, personal digital assistants (PDAs), and other electronic devices both wired and wireless.

In addition, the various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Furthermore, the one or more versions may be implemented as a method, apparatus, or article of manufacture using standard programming and/or engineering techniques to produce software, firmware, hardware, or any combination thereof to control a computer to implement the disclosed aspects. The term "article of manufacture" (or alternatively, "computer program product") as used herein is intended to encompass a computer program accessible from any computer-readable device, carrier, or media. For example, computer readable media can include but are not limited to magnetic storage devices (e.g., hard disk, floppy disk, magnetic strips...), optical disks (e.g., compact disk (CD), digital versatile disk (DVD)...), smart cards, and flash memory devices (e.g., card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the disclosed aspects.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed aspects is provided to enable any person skilled in the art to make or use the present disclosure. Various modifications to these aspects will be readily apparent to those skilled in the art, and the generic principles defined herein may be applied to other embodiments without departing from the spirit or scope of the disclosure. Thus, the present disclosure is not intended to be limited to the embodiments shown herein but is to be accorded the widest scope consistent with the principles and novel features disclosed herein.

In view of the exemplary systems described supra, methodologies that may be implemented in accordance with the disclosed subject matter have been described with reference to several flow diagrams. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described herein. Additionally, it should be further appreciated that the methodologies disclosed herein are capable of being stored on an article of manufacture to facilitate transporting and transferring such methodologies to computers. The term article of manufacture, as used herein, is intended to encompass a computer program accessible from any computer-readable device, carrier, or media.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein, will only be incorporated to the extent that no conflict arises between that incorporated material and the existing disclosure material.

## Claims

1. A method for licensing, comprising:
detecting a licensable item on a device;
accessing a legacy license associated with the licensable item, wherein the legacy license corresponds to a legacy licensing policy;
accessing a layered license associated with the licensable item, wherein the layered license corresponds to a layered licensing policy, and wherein the layered licensing policy provides a licensing feature not provided by the legacy licensing policy;
integrating the legacy licensing policy and the layered licensing policy into an integrated license by generating valid unlimited use licenses and applying the unlimited use licenses to all licensable items protected by the layered licensing policy; and
enforcing the integrated license by a legacy licensing component operating in combination with a layered licensing component.

2. The method of claim 1, wherein accessing the legacy license further comprises accessing an unlimited license, and wherein accessing the layered license further comprises accessing a network communication requirement.

3. The method of claim 1, wherein integrating the legacy licensing policy and the layered licensing policy further comprises determining a combination of constraints imposed by both the legacy license and the layered license.

4. The method of claim 1, wherein accessing the legacy license and the legacy licensing policy provides a null result, and wherein integrating the legacy licensing policy and the layered licensing policy further comprises determining a constraint imposed by the layered license.

5. The method of claim 1, wherein accessing the layered license further comprises accessing a remote license server to receive at least a portion of the layered licensing policy associated with the layered license.

6. The method of claim 1, wherein the licensable item comprises one of media content or application content or a service.

7. The method of claim 1, wherein accessing the legacy license and the layered license both associated with the licensable item further comprises:
determining an item identifier corresponding to the licensable item; and
determining the legacy licensing policy and the layered licensing policy based upon a match between the item identifier and a license identifier corresponding to the licensable item.

8. The method of claim 1, wherein accessing the legacy license associated with the licensable item and accessing the layered license associated with the licensable item further comprises:
determining an item type corresponding to the licensable item; and
determining the legacy licensing policy and the layered licensing policy based upon a match between the item type and a license type corresponding to the licensable item.

9. An apparatus for licensing, comprising:
means for detecting a licensable item on a device;
means for accessing a legacy license associated with the licensable item, wherein the legacy license corresponds to a legacy licensing policy;
means for accessing a layered license associated with the licensable item, wherein the layered license corresponds to a layered licensing policy, and wherein the layered licensing policy provides a licensing feature not provided by the legacy licensing policy;
means for integrating the legacy licensing policy and the layered licensing policy into an integrated license by generating valid unlimited use licenses and applying the unlimited use licenses to all licensable items protected by the layered licensing policy; and
means for enforcing the integrated license by causing a legacy licensing component to operate in combination with a layered licensing component.

10. The apparatus of claim 9, wherein the license enforcement component is further for accessing the legacy license by accessing an unlimited license, and wherein accessing the layered license further comprises accessing a network communication requirement.

11. The apparatus of claim 9, wherein the license enforcement component is further for integrating the legacy licensing policy and the layered licensing policy by determining a combination of constraints imposed by both the legacy license and the layered license.

12. The apparatus of claim 9, wherein the license enforcement component is further for accessing the legacy license and the legacy licensing policy that provides a null result, and wherein the license enforcement component is further for integrating the legacy licensing policy and the layered licensing policy by determining a constraint imposed by the layered license.

13. The apparatus of claim 9, wherein the licensable item comprises one of media content or application content or a service.

14. The apparatus of claim 9, wherein the license enforcement component is further for accessing the legacy license and the layered license both associated with the licensable item by:
determining an item type corresponding to the licensable item; and
determining the legacy licensing policy and the layered licensing policy based upon a match between the item type and a license type corresponding to the licensable item.

15. A computer program product for licensing, comprising:
a non-transitory computer-readable storage medium for storing instructions, which when executed by a computer, cause the computer to undertake the method of any of claims 1 to 9.

## Patentansprüche

1. Verfahren zum Lizenzieren, das Folgendes beinhaltet:
Erkennen eines lizenzierbaren Artikels auf einem Gerät;
Zugreifen auf eine mit dem lizenzierbaren Artikel assoziierte Legacy-Lizenz, wobei die Legacy-Lizenz einer Legacy-Lizenzierungsrichtlinie entspricht;
Zugreifen auf eine mit dem lizenzierbaren Artikel assoziierte geschichtete Lizenz, wobei die geschichtete Lizenz einer geschichteten Lizenzierungsrichtlinie entspricht und wobei die geschichtete Lizenzierungsrichtlinie ein Lizenzierungsmerkmal bereitstellt, das von der Legacy-Lizenzierungsrichtlinie nicht bereitgestellt wird;
Integrieren der Legacy-Lizenzierungsrichtlinie und der geschichteten Lizenzierungsrichtlinie zu einer integrierten Lizenz durch Erzeugen von gültigen unbegrenzten Nutzungslizenzen und Anwenden der unbegrenzten Nutzungslizenzen auf alle durch die geschichtete Lizenzierungsrichtlinie geschützten lizenzierbaren Artikel; und
Gewährleisten der Einhaltung der integrierten Lizenz durch eine Legacy-Lizenzierungskomponente, die in Kombination mit einer geschichteten Lizenzierungskomponente arbeitet.

2. Verfahren nach Anspruch 1, wobei das Zugreifen auf die Legacy-Lizenz ferner das Zugreifen auf eine unbegrenzte Lizenz beinhaltet und wobei das Zugreifen auf die geschichtete Lizenz ferner das Zugreifen auf eine Netzwerkkommunikationsanforderung beinhaltet.

3. Verfahren nach Anspruch 1, wobei das Integrieren der Legacy-Lizenzierungsrichtlinie und der geschichteten Lizenzierungsrichtlinie das Bestimmen einer Kombination von Beschränkungen beinhaltet, die sowohl von der Legacy-Lizenz als auch von der geschichteten Lizenz auferlegt werden.

4. Verfahren nach Anspruch 1, wobei das Zugreifen auf die Legacy-Lizenz und die Legacy-Lizenzierungsrichtlinie ein Nullergebnis ergibt und wobei das Integrieren der Legacy-Lizenzierungsrichtlinie und der geschichteten Lizenzierungsrichtlinie ferner das Bestimmen einer von der geschichteten Lizenz auferlegten Beschränkung beinhaltet.

5. Verfahren nach Anspruch 1, wobei das Zugreifen auf die geschichtete Lizenz ferner das Zugreifen auf einen fernen Lizenzserver zum Empfangen wenigstens eines Teils der mit der geschichteten Lizenz assoziierten geschichteten Lizenzierungsrichtlinie beinhaltet.

6. Verfahren nach Anspruch 1, wobei der lizenzierbare Artikel Medieninhalt oder Anwendungsinhalt oder einen Service umfasst.

7. Verfahren nach Anspruch 1, wobei das Zugreifen auf die Legacy-Lizenz und die geschichtete Lizenz, die beide mit dem lizenzierbaren Artikel assoziiert sind, ferner Folgendes beinhaltet:
Bestimmen einer dem lizenzierbaren Artikel entsprechenden Artikelkennung; und
Bestimmen der Legacy-Lizenzierungsrichtlinie und der geschichteten Lizenzierungsrichtlinie auf der Basis einer Übereinstimmung zwischen der Artikelkennung und einer Lizenzkennung entsprechend dem lizenzierbaren Artikel.

8. Verfahren nach Anspruch 1, wobei das Zugreifen auf die mit dem lizenzierbaren Artikel assoziierte Legacy-Lizenz und das Zugreifen auf die mit dem lizenzierbaren Artikel assoziierte geschichtete Lizenz ferner Folgendes beinhaltet:
Bestimmen eines Artikeltyps entsprechend dem lizenzierbaren Artikel; und
Bestimmen der Legacy-Lizenzierungsrichtlinie und der geschichteten Lizenzierungsrichtlinie auf der Basis einer Übereinstimmung zwischen dem Artikeltyp und einem Lizenztyp entsprechend dem lizenzierbaren Artikel.

9. Vorrichtung zum Lizenzieren, die Folgendes umfasst:
Mittel zum Erkennen eines lizenzierbaren Artikels auf einem Gerät;
Mittel zum Zugreifen auf eine mit dem lizenzierbaren Artikel assoziierte Legacy-Lizenz, wobei die Legacy-Lizenz einer Legacy-Lizenzierungsrichtlinie entspricht;
Mittel zum Zugreifen auf eine mit dem lizenzierbaren Artikel assoziierte geschichtete Lizenz, wobei die geschichtete Lizenz einer geschichteten Lizenzierungsrichtlinie entspricht und wobei die geschichtete Lizenzierungsrichtlinie ein Lizenzierungsmerkmal bereitstellt, das von der Legacy-Lizenzierungsrichtlinie nicht bereitgestellt wird;
Mittel zum Integrieren der Legacy-Lizenzierungsrichtlinie und der geschichteten Lizenzierungsrichtlinie zu einer integrierten Lizenz durch Erzeugen von gültigen unbegrenzten Nutzungslizenzen und Anwenden der unbegrenzten Nutzungslizenzen auf alle durch die geschichtete Lizenzierungsrichtlinie geschützten lizenzierbaren Artikel; und
Mittel zum Gewährleisten der Einhaltung der integrierten Lizenz durch Bewirken, dass eine Legacy-Lizenzierungskomponente in Kombination mit einer geschichteten Lizenzierungskomponente arbeitet.

10. Vorrichtung nach Anspruch 9, wobei die Lizenzeinhaltungsgewährleistungskomponente ferner zum Zugreifen auf die Legacy-Lizenz durch Zugreifen auf eine unbegrenzte Lizenz dient und wobei das Zugreifen auf die geschichtete Lizenz ferner das Zugreifen auf eine Netzwerkkommunikationsanforderung beinhaltet.

11. Vorrichtung nach Anspruch 9, wobei die Lizenzeinhaltungsgewährleistungskomponente ferner zum Integrieren der Legacy-Lizenzierungsrichtlinie und der geschichteten Lizenzierungsrichtlinie durch Bestimmen einer Kombination von Beschränkungen dient, die sowohl durch die Legacy-Lizenz als auch durch die geschichtete Lizenz auferlegt werden.

12. Vorrichtung nach Anspruch 9, wobei die Lizenzeinhaltungsgewährleistungskomponente ferner zum Zugreifen auf die Legacy-Lizenz und die Legacy-Lizenzierungsrichtlinie dient, die ein Nullergebnis ergibt, und wobei die Lizenzeinhaltungsgewährleistungskomponente ferner zum Integrieren der Legacy-Lizenzierungsrichtlinie und der geschichteten Lizenzierungsrichtlinie durch Bestimmen einer durch die geschichtete Lizenz auferlegten Beschränkung dient.

13. Vorrichtung nach Anspruch 9, wobei der lizenzierbare Artikel Medieninhalt oder Anwendungsinhalt oder einen Service umfasst.

14. Vorrichtung nach Anspruch 9, wobei die Lizenzeinhaltungsgewährleistungskomponente ferner zum Zugreifen auf die Legacy-Lizenz und die geschichtete Lizenz dient, die beide mit dem lizenzierbaren Artikel assoziiert sind, durch:
Bestimmen eines Artikeltyps entsprechend dem lizenzierbaren Artikel; und
Bestimmen der Legacy-Lizenzierungsrichtlinie und der geschichteten Lizenzierungsrichtlinie auf der Basis einer Übereinstimmung zwischen dem Artikeltyp und einem Lizenztyp entsprechend dem lizenzierbaren Artikel.

15. Computerprogrammprodukt zum Lizenzieren, das Folgendes umfasst:
ein nichtflüchtiges computerlesbares Speichermedium zum Speichern von Befehlen, die bei Ausführung durch einen Computer bewirken, dass der Computer das Verfahren nach einem der Ansprüche 1 bis 9 durchführt.

## Revendications

1. Procédé de concession de licence, comprenant :
la détection d'un article pouvant être concédé sous licence sur un dispositif ;
l'accès à une licence patrimoniale associée à l'article pouvant être concédé sous licence, dans lequel la licence patrimoniale correspond à une politique de concession de licences patrimoniales ;
l'accès à une licence par étages associée à l'article pouvant être concédé sous licence, dans lequel la licence par étages correspond à une politique de concession de licences par étages,
et dans lequel la politique de concession de licences par étages fournit une caractéristique de concession de licence non fournie par la politique de concession de licences patrimoniales ;
l'intégration de la politique de concession de licences patrimoniales et de la politique de concession de licences par étages en une licence intégrée en générant des licences d'utilisation illimitée valides dans le système patrimonial et en appliquant les licences d'utilisation illimitée à tous les articles pouvant être concédés sous licence protégés par la politique de concession de licences par étages ; et
la mise en vigueur de la licence intégrée par un composant de concession de licences patrimoniales fonctionnant en combinaison avec un composant de concession de licences par étages.

2. Procédé selon la revendication 1, dans lequel l'accès à la licence patrimoniale comprend en outre l'accès à une licence illimitée, et dans lequel l'accès à la licence par étages comprend en outre l'accès à une exigence de communication de réseau.

3. Procédé selon la revendication 1, dans lequel l'intégration de la politique de concession de licences patrimoniales et de la politique de concession de licences par étages comprend en outre la détermination d'une combinaison de contraintes imposées à la fois par la licence patrimoniale et par la licence par étages.

4. Procédé selon la revendication 1, dans lequel l'accès à la licence patrimoniale et à la politique de concession de licence patrimoniale produit un résultat nul, et dans lequel l'intégration de la politique de concession de licences patrimoniales et de la politique de concession de licences par étages comprend en outre la détermination d'une contrainte imposée par la licence par étages.

5. Procédé selon la revendication 1, dans lequel l'accès à la licence par étages comprend en outre l'accès à un serveur de licences distant pour recevoir au moins une partie de la politique de concession de licences par étages associée à la licence par étages.

6. Procédé selon la revendication 1, dans lequel l'article pouvant être concédé sous licence comprend l'un d'un contenu multimédia ou d'un continu d'application ou d'un service.

7. Procédé selon la revendication 1, dans lequel l'accès à la licence patrimoniale et à la licence par étages toutes les deux associées à l'article pouvant être concédé sous licence comprend en outre :
la détermination d'un identifiant d'article correspondant à l'article pouvant être concédé sous licence ; et
la détermination de la politique de concession de licences patrimoniales et de la politique de concession de licences par étages en fonction d'une correspondance entre l'identifiant d'article et un identifiant de licence correspondant à l'article pouvant être concédé sous licence.

8. Procédé selon la revendication 1, dans lequel l'accès à la licence patrimoniale associée à l'article pouvant être concédé sous licence et l'accès à la licence par étages associée à l'article pouvant être concédé sous licence comprend en outre :
la détermination d'un type d'article correspondant à l'article pouvant être concédé sous licence ; et
la détermination de la politique de concession de licences patrimoniales et de la politique de concession de licences par étages en fonction d'une correspondance entre le type d'article et un type de licence correspondant à l'article pouvant être concédé sous licence.

9. Appareil de concession de licence, comprenant :
un moyen de détection d'un article pouvant être concédé sous licence sur un dispositif ;
un moyen d'accès à une licence patrimoniale associée à l'article pouvant être concédé sous licence, dans lequel la licence patrimoniale correspond à une politique de concession de licences patrimoniales ;
un moyen d'accès à une licence par étages associée à l'article pouvant être concédé sous licence, dans lequel la licence par étages correspond à une politique de concession de licences par étages, et dans lequel la politique de concession de licences par étages fournit une caractéristique de concession de licence non fournie par la politique de concession de licences patrimoniales ;
un moyen d'intégration de la politique de concession de licences patrimoniales et de la politique de concession de licences par étages en une licence intégrée en générant des licences d'utilisation illimitée valides dans le système patrimonial et en appliquant les licences d'utilisation illimitée à tous les articles pouvant être concédés sous licence protégés par la politique de concession de licences par étages ; et
un moyen de mise en vigueur de la licence intégrée par un composant de concession de licences patrimoniales fonctionnant en combinaison avec un composant de concession de licences par étages.

10. Appareil selon la revendication 9, dans lequel le composant de mise en vigueur de licence sert en outre à accéder à la licence patrimoniale en accédant à une licence illimitée, et dans lequel l'accès à la licence par étages comprend en outre l'accès à une exigence de communication de réseau.

11. Appareil selon la revendication 9, dans lequel le composant de mise en vigueur de licence sert en outre à intégrer la politique de concession de licences patrimoniales et la politique de concession de licences par étages en déterminant une combinaison de contraintes imposées à la fois par la licence patrimoniale et par la licence par étages.

12. Appareil selon la revendication 9, dans lequel le composant de mise en vigueur de licence sert en outre à accéder à la licence patrimoniale et à la politique de concession de licences patrimoniale qui fournit un résultat nul, et dans lequel le composant de mise en vigueur de licence sert en outre à intégrer la politique de concession de licences patrimoniales et la politique de concession de licences par étages en déterminant une contrainte imposée par la licence par étages.

13. Appareil selon la revendication 9, dans lequel l'article pouvant être concédé sous licence comprend l'un d'un contenu multimédia ou d'un continu d'application ou d'un service.

14. Appareil selon la revendication 1, dans lequel le composant de mise en vigueur de licence sert en outre à accéder à la licence patrimoniale et à la licence par étages toutes les deux associées à l'article pouvant être concédé sous licence en :
déterminant un type d'article correspondant à l'article pouvant être concédé sous licence ; et
déterminant la politique de concession de licences patrimoniales et la politique de concession de licences par étages en fonction d'une correspondance entre le type d'article et un type de licence correspondant à l'article pouvant être concédé sous licence.

15. Produit de programme informatique de concession de licence, comprenant :
un support de mémorisation non transitoire lisible par ordinateur pour mémoriser des instructions qui, à leur exécution par un ordinateur, amènent l'ordinateur à entreprendre le procédé selon l'une quelconque des revendications 1 à 9.
